**Europäisches Patentamt**

**European Patent Office**

**Office européen des brevets**

(11) Publication number: **0 397 627**
**A1**

## (12) EUROPEAN PATENT APPLICATION

(21) Application number: **90850098.6**

(22) Date of filing: **07.03.90**

(51) Int. Cl.⁵: **E21D 9/10, H02K 7/14, H02K 9/19**

(30) Priority: **10.04.89 SE 8901261**

(43) Date of publication of application:
**14.11.90 Bulletin 90/46**

(84) Designated Contracting States:
**AT CH DE FR IT LI**

(71) Applicant: **ATLAS COPCO MCT AB**
**Nacka**
**S-104 84 Stockholm(SE)**

(72) Inventor: **Hartwig, Carl Sverker Magnusson**
**Gripsvallsvägen 7**
**S-183 46 Täby(SE)**

(74) Representative: **Grundfelt, Gunnar**
**Atlas Copco MCT AB Patents & Trademarks**
**S-104 84 Stockholm(SE)**

(54) **Tunnel boring machine.**

(57) Tunnel boring machine. The machine comprises a housing (1,2,3) carrying the stator (5) of an electric motor. A boring head (9) is journalled on the housing. The boring head carries the rotor (7) of the electric motor. The motor is multipolar and is fed with low frequency current from an inverter (16).

# Tunnel boring machine

The present invention relates to a tunnel boring machine, i.e. a machine which bores the tunnel without the use of explosives.

During boring with a tunnel boring machine the boring head is pressed against the tunnel front with large force at the same time as it is rotated. For this several motors are often used which via their own gear boxes drive the boring head.

The present invention, which is defined in the subsequent claims, aims at achieving a tunnel boring machine with direct driving of the boring head by means of one single electric motor. Hereby a multipole synchronous motor driven from an inverter delivering low frequency alternating current is preferred.

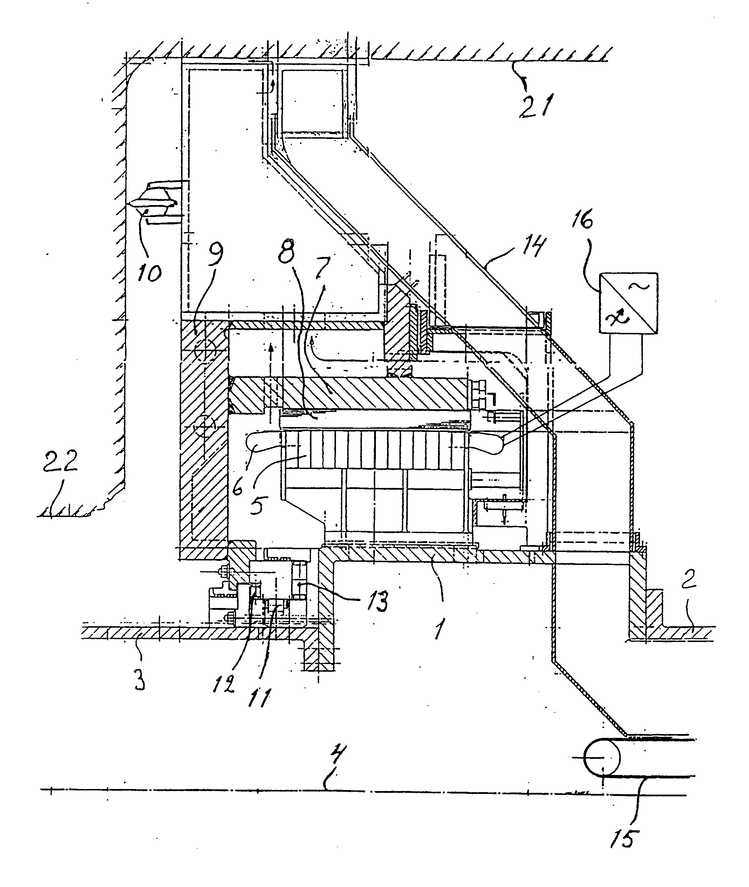

An embodiment of the invention is described below with reference to the accompanying drawing which schematically shows a section through a part of a tunnel boring machine according to the invention.

The tunnel boring machine shown in the drawing comprises a housing 1,2,3 which during boring is fixed relative to the tunnel 21 by not shown hydraulic cylinders. The housing is furthermore fixed by means of not shown hydraulic cylinders in the pilot tunnel 22. In the drawing only the upper part of the tunnel boring machine is shown, which is marked by the centre line 4. Housing 1 carries a stator 5 forming part of an electric motor, preferably a synchronous motor. Stator 5 is provided with usual windings 6 which are fed with current from an inverter 16. The motor is multipolar, e.g. 40-polar for a big tunnel boring machine, and is fed with low frequency, e.g. 1 Hz, current. A boring head 9 is by means of bearings 11,12,13 journalled on the housing part 3. The boring head carries a number of cutters 10 of which one is shown. The boring head further carries rotor 7 of the electric motor in which a number of pole pieces 8 is evenly distributed about the rotor. In operation the motor is cooled either by air or by arranging the motor immerged in an oil bath which forms part of a closed circuit comprising a heat exchanger. The bored out rock follows the boring head in its rotation to the upper part of the tunnel from where the pieces fall down through channel 14 to conveyor 15 which transports the rock away. Through the use of one single motor which is fed with low frequency current it has been possible to substantially reduce the number of parts in the drive of the tunnel boring machine, which results in a cheaper machine whose maintenance is substantially simplified.

## Claims

1. Tunnel boring machine comprising a housing (1,2,3), a boring head (9) rotatable relative to the housing and an electric motor (5,7) for rotation of the boring head, **characterized** in that the stator (5) of said electric motor is arranged fixed relative to said housing (1,2,3), that the rotor (7) of said electric motor is arranged fixed relative to said boring head (9), that said electric motor is multipolar and that the electric motor is fed with low frequency alternating current from an inverter (16).

2. Tunnel boring machine according to claim 1, **characterized** in that the electric motor (5,7) is immersed in an oil bath for cooling.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 133 249  (MANNESMANN) <br> * Whole document * | 1 | E 21 D    9/10 <br> H 02 K    7/14 <br> H 02 K    9/19 |
| Y | | 2 | |
| Y | DE-C-3 635 297  (WALZEL) <br> * Abstract * | 2 | |
| A | DE-A-2 138 597  (LICENTIA) <br> * Page 4 - page 5, paragraph 1; page 9, paragraphs 2-4; figures * | 1 | |
| A | EP-A-0 114 024  (SIEMENS) <br> * Abstract * | 1,2 | |
| A | BROWN BOVERI REVIEW, vol. 70, no. 11, November 1983, pages 433-438, Baden, CH; E. BLÄUENSTEIN et al.: "Over 350 000 service hours with gearless mill drives from BBC - their design today" | | |

TECHNICAL FIELDS
SEARCHED (Int. Cl.5)

E 21 D
E 21 B
H 02 K
E 02 F

The present search report has been drawn up for all claims

| Place of search | Date of completion of the search | Examiner |
|---|---|---|
| THE HAGUE | 12-07-1990 | RAMPELMANN J. |

EPO FORM 1503 03.82 (P0401)